# EUROPÄISCHE PATENTSCHRIFT

(11) **EP 0 624 510 B1**
(45) Veröffentlichungstag und Bekanntmachung des Hinweises auf die Patenterteilung: **07.02.1996**
(21) Anmeldenummer: 94106088.1
(22) Anmeldetag: 20.04.1994
(51) Int. Cl.: B62D 25/06

(54) **Fahrzeugdach-Gestaltung, insbesondere eines LKW-Fahrerhauses, für die Befestigung von An- bzw. Aufbauteilen**
Vehicle roof construction, in particular for the cab of a lorry, suitable for the mounting of accessories
Structure d'un toit de véhicule, notamment pour une cabine du conducteur d'un camion, pour la fixation des accessoires

(30) Priorität: 13.05.1993 DE 4316042
(43) Veröffentlichungstag der Anmeldung: 17.11.1994
(73) Patentinhaber: MAN Nutzfahrzeuge Aktiengesellschaft, D-80976 München (DE)
(72) Erfinder: Kneifel, Eberhard Dipl.-Ing, D-89250 Senden (DE); Koch, Erich, D-85757 Karlsfeld (DE); Watzek, Gerhard, D-80935 München (DE)

(56) Entgegenhaltungen:
- DE-U- 6 608 275
- US-A- 4 834 448
- US-A- 5 090 605

## Beschreibung

Die Erfindung betrifft eine Fahrzeugdach-Gestaltung, insbesondere eines Lkw-Fahrerhauses, für die Befestigung von An- bzw. Aufbauteilen, mit Merkmalen entsprechend dem Oberbegriff des Anspruches 1.

Für die Befestigung von An- bzw. Aufbauteilen auf dem Dach eines Fahrzeuges sind verschiedene Lösungen bekannt. Aus der US-PS 4, 834, 448 beispielsweise ist es in Verbindung mit Personenkraftwagen, insbesondere Kombifahrzeugen, bekannt, zur Befestigung zweier Dachgepäckträgertraversen im Dach des Fahrzeuges Rinnen vorzusehen. Diese Rinnen weisen Auflageflächen auf, an denen die beiden seitlichen Enden der Dachgepäckträgertraversen unter Zwischenlage eines dem Lackschutz dienenden Gummiorganes abgestützt sind. Zur Befestigung der beiden Dachträgertraversen-Enden ist eine Verschraubung direkt mit dem Dach des Fahrzeuges vorgesehen, wobei die diesbezüglichen Schrauben die Dachaußenhaut vollständig durchdringen und in innen an der Dachhaut als Gegenstücke befestigten Anschlußorganen eingeschraubt werden. Dies setzt also sowohl eine entsprechende Gestaltung der Dachaußenhaut als auch eine entsprechende Anbringung von Anschlußorganen an der Dachinnenhaut sowie entsprechende Durchbrechungen des Daches für die Schraubendurchführung voraus. Diese Lösung ist jedoch vergleichsweise teuer in der Herstellung und wirft Dichtungs- und Korrosionsprobleme auf, die nur durch teure Abdeckungen der Rinnen und der Dachdurchgangsbohrungen einigermaßen beherrschbar sind.

Darüber hinaus ist es auch schon bekannt, an der Dachaußenhaut eines Fahrzeuges Gewindeplatten oder sonstige Halter anzuschweißen. Diese stehen in jedem Falle über die Dachfläche vor und beeinträchtigen, sofern am Dach keine An-bzw. Aufbauteile befestigt sind, den optischen Gesamteindruck des Fahrzeugdaches.

Es ist daher Aufgabe der Erfindung, ein Fahrzeugdach generell so zu gestalten, daß an ihm Mittel für die Befestigung von An- bzw. Aufbauten gegeben sind, die unabhängig davon, ob letztere angebracht sind oder nicht, den optischen Gesamteindruck des Fahrzeugdaches nicht stören und grundsätzlich keine Dichtungs- und Korrosionsprobleme hervorrufen.

Diese Aufgabe ist erfindungsgemäß durch eine Fahrzeugdach-Gestaltung mit Merkmalen der im Anspruch 1 angegebenen Art gelöst.

Vorteilhafte Ausgestaltungen dieser Lösung sind in den Unteransprüchen angegeben.

Die erfindungsgemäßen Vertiefungen lassen sich bei der Herstellung des Fahrzeugdaches in einem Arbeitsgang mit in die Dachaußenhaut einpressen. Nach dem Anschweißen der ebenfalls sehr einfach und billig herstellbaren Befestigungsplatten in diesen Vertiefungen können diese zusammen mit dem fertigen Fahrzeugdach bzw. Rohfahrerhaus lackiert werden, wobei die erfindungsgemäße Konstruktion dem hierfür üblichen Tauchlackiervorgang keine Probleme entgegensetzt. Da die Befestigungsplatten die Dachkontur nicht überragen, beeinträchtigen sie, wenn keine An- bzw. Aufbauteile am Fahrzeugdach befestigt sind, den optischen Gesamteindruck des Fahrzeugdaches in keinster Weise. Mit besonderem Vorteil erlaubt aber die erfindungsgemäße Fahrzeugdach-Gestaltung jederzeit eine problemlose Anbringung von An- bzw. Aufbauteilen, wie Dachspoiler, Sonnenblenden oder Fahrzeugaggregaten, ohne daß ein nachträgliches Bohren, Entfernen von Verschlußstopfen, Verschraubungen, Dichtungen und dergleichen notwendig wäre. Die erfindungsgemäße Fahrzeugdach-Gestaltung wirft außerdem keine Dichtungsprobleme auf, da das Dach per se immer dicht bleibt und außerdem Regenwasser jederzeit ablaufen kann.

Nachstehend ist die erfindungesmäße Fahrzeugdach-Gestaltung anhand eines in der Zeichnung dargestellten Ausführungsbeispieles noch näher erläutert. In der Zeichnung zeigen:

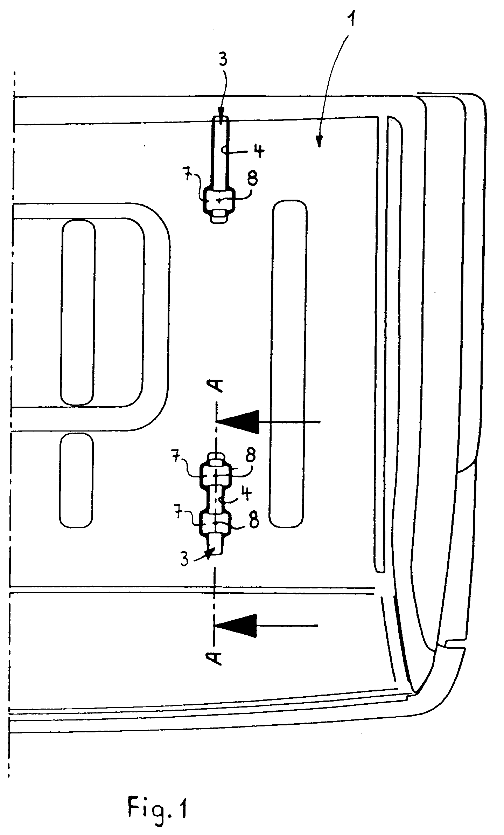

- Fig. 1: eine Draufsicht auf eine Dach-Hälfte eines Lkw-Fahrerhauses,

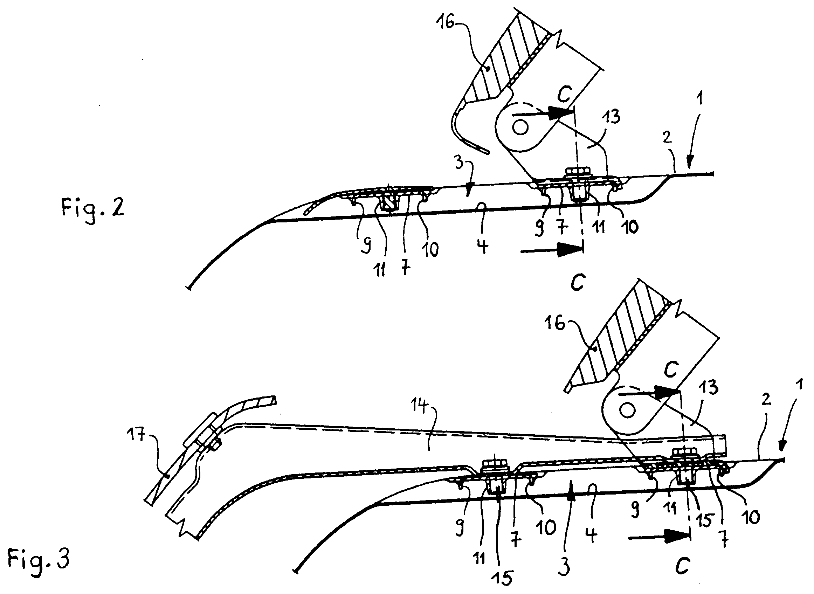

- Fig.2: einen Schnitt durch die erfindungsgemäße Fahrzeugdach-Gestaltung entlang der in Fig. 1 gezeigten Schnittlinie A-A, wobei beispielhaft ein teilweise dargestellter Dachspoiler angebaut ist,
- Fig. 3: einen Schnitt durch die Fahrzeugdach-Gestaltung gemäß Fig. 1 entlang der dort eingezeichneten Schnittlinie A-A, wobei hier beispielhaft ein teilweise dargestellter Dachspoiler und eine teilweise dargestellte Sonnenblende angebaut sind, und
- Fig. 4: einen Schnitt durch die erfindungsgemäße Fahrzeugdach-Gestaltung entlang der in Fig. 2 bzw. Fig. 3 eingetragenen Schnittlinie C-C.

In den Figuren ist das Fahrzeugdach mit 1 bezeichnet. Entsprechend der erfindungsgemäßen Fahrzeugdach-Gestaltung sind in die Dachaußenhaut 2 an geeigneten Stellen, zweckmäßigerweise in der Nähe von Dachinnenverstärkungen oder Anlagestellen der Dachinnenhaut Vertiefungen 3 eingepreßt. Diese Vertiefungen 3 verlaufen vorzugsweise in Fahrzeuglängsrichtung und bestehen jeweils aus einer Wasserablaufrinne 4 sowie beiderseits desselben gegebenen, höher liegenden Auflageflächen 5, 6. Die beiden Auflageflächen 5, 6 einer Vertiefung 3 liegen dabei vorzugsweise in einer Horizontalebene. An den beiden Auflageflächen 5, 6 einer Vertiefung 3 aufliegend ist wenigstens eine Befestigungsplatte 7 angeschweißt, insbesondere angepunktet. Jede Befestigungsplatte 7 weist wenigstens eine Durchgangsgewindebohrung 8 auf.

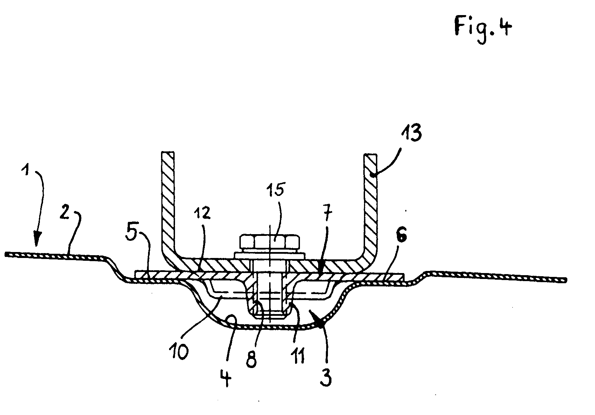

Die Befestigungsplatten 7 sind vorzugsweise durch verzinkte Blechpreßteile realisiert, weisen eine ebene Oberfläche und vorn sowie hinten nach unten abgebogene, in dem Bereich der Wasserablaufrinne 4 eintauchende, zur Versteifung dienende Bereiche 9, 10 auf. Falls die Befestigungsplatten 7 durch Blechpreßteile realisiert werden, wird zur Bildung der Durchgangsgewindebohrung 8 in eine Befestigungsplatte 7 bei deren Formpressung ein Kernloch mit nach unten vorspringendem Wulstrand 11 eingepreßt, in welches solchermaßen verlängerte Kernloch dann ein Durchgangsgewinde eingeschnitten wird. Der besagte Wulstrand 11 ragt ebenso wie die versteifenden Bereiche 9, 10 in den Bereich der Wasserablaufrinne 4 vorzugsweise jedoch tiefer als die vorgenannten hinein, ohne jedoch deren Boden zu berühren. An den vorzugsweise nicht, und wenn, nur geringfügig über die Dachkontur hinausragenden ebenen Oberseiten 12 der Befestigungsplatten 7 sind Tragorgane 13, 14 für Dachauf- bzw. anbauten abgestützt fixierbar, und zwar mittels in die jeweilige Durchgangsbohrung 8 einer Befestigungsplatte 7 eingeschraubter Befestigungsschraube 15. Letztere hat, wie gut aus Fig. 4 ersichtlich grundsätzlich eine solche Länge, daß sie im voll eingeschraubten Zustand nicht bis zum Grund der Wasserablaufrinne 4 einer Vertiefung 3 reicht, somit innerhalb letzterer ein ungehinderter Wasserdurch- und ablauf unter einer Befestigungsplatte 7 hindurch gewährleistet bleibt.

Im dargestellten Beispiel dienen die Tragorgane 13 zur Befestigung eines Dachspoilers 16 und die Tragorgane 14 zur Befestigung einer Sonnenschutzblende 17, die vor das Fahrzeugdach bis in den oberen Bereich der Windschutzscheibe hineinragt.

Vorzugsweise sind die Tragorgane 13, 14 auch so gestaltet, daß sie in Anbaulage die Befestigungsplatten 7 oben, in Fahrzeug-Längsrichtung vorn und hinten formschlüssig übergreifen, wodurch beim Montieren der Anbauten 16, 17 diese über ihre Tragorgane 13, 14 lagemäßig auch gegen Verdrehung um die Hochachse am Fahrzeugdach fixiert werden und überdies in Anbaulage eine zusätzliche Stabilisierung der Anbauten 16, 17 am Fahrzeugdach erreicht wird.

## Patentansprüche

1. Fahrzeugdach-Gestaltung, insbesondere eines Lkw-Fahrerhauses, für die Befestigung von An- bzw. Aufbauteilen, mit Vertiefungen in der Dach-Außenhaut mit Auflageflächen, an denen mittelbar Tragorgane für die Dachauf- bzw. anbauten befestigt sind, dadurch gekennzeichnet,
daß die Vertiefungen (3) in die Dach-Außenhaut (2) eingepreßt sind,
daß jede Vertiefung (3) aus einer Wasserablaufrinne (4) und beiderseits derselben gegebenen, höher liegenderen Auflageflächen (5, 6) besteht,
daß an den beiden Auflageflächen (5, 6) einer Vertiefung (3) eine die Wasserablaufrinne (4) überbrückende Befestigungsplatte (7) aufliegend angeschweißt ist,
daß jede Befestigungsplatte (7) eine Durchgangs-Gewindebohrung (8) und eine ebene, in Einbaulage nicht oder nur geringfügig über die Dachkontur hinausragende Oberseite (12) aufweist, und
daß an den Oberseiten (12) der Befestigungsplatten (7) Tragorgane (13, 14) für die Dachauf- bzw. -anbauten (16, 17) abgestützt und dort mittels in die Durchgangs-Gewindebohrungen (8) eingeschraubter Befestigungsschrauben (15), die ohne Dachaußenhaut-Berührung nur bis in den Bereich der jeweiligen Wasserablaufrinne (4) eintauchen, fixierbar sind.

2. Fahrzeugdach-Gestaltung nach Anspruch 1, dadurch gekennzeichnet, daß die Befestigungsplatten (7) in Fahrzeug-Längsrichtung vorn und hinten nach unten abgebogene, in den Bereich der Wasserablaufrinne (4) eintauchende, zur Versteifung dienende Bereiche (9, 10) aufweisen.

3. Fahrzeugdach-Gestaltung nach einem der vorhergehenden Ansprüche, dadurch gekennzeichnet, daß die Tragorgane (13, 14) derart gestaltet sind, daß die Befestigungsplatten (7) oben, in Fahrzeug-Längsrichtung vorn und hinten formschlüssig übergriffen werden.

4. Fahrzeugdach-Gestaltung nach einem der vorhergehenden Ansprüche, dadurch gekennzeichnet, daß die Befestigungsplatten (7) als verzinkte Blechpreßteile hergestellt sind.

5. Fahrzeugdach-Gestaltung nach Anspruch 4, dadurch gekennzeichnet, daß zur Bildung einer Durchgangs-Gewindebohrung (8) in die Befestigungsplatte (7) bei deren Formpressung ein Kernloch mit nach unten vorspringendem Wulstrand (11) eingepreßt und in dieses solchermaßen verlängerte Kernloch dann ein Durchgangsgewinde eingeschnitten wird.

## Claims

1. Vehicle roof design, particularly for a truck cab, for the attachment of add-on components and superstructures, with recesses in the roof shell with support faces to which support organs for roof superstructures and add-on components are indirectly fitted, characterised in that
the recesses (3) are impressed in the roof shell (2),
each recess (3) consists of a water drain channel (4) and support faces (5, 6) located at a higher level on either side of said recess (3),
a mounting plate (7) bridging the water drain channel (4) contacts and is welded to the two support faces (5, 6) of a recess (3),
each mounting plate (7) is perforated by a threaded bore (8) and has a level upper side (12) which, in its installation position, projects only slightly if at all beyond the roof contour, and that
support organs (13, 14) for roof superstructures and/or add-on components (16, 17) rest on the upper sides (12) of the mounting plates (7) and can be fastened to them by means of mounting bolts (15) that are screwed into the threaded bores (8) and reach only into the area of the respective water drain channel (4) without contacting the roof shell.

2. Vehicle roof design according to Claim 1, characterised in that, in the vehicle's longitudinal axis, the mounting plates (7) have downward curving portions (9, 10) at front and rear that reach into the area of the water drain channel (4) and serve to reinforce the structure.

3. Vehicle roof design according to one of the foregoing Claims, characterised in that the support organs (13, 14) are designed so that the mounting plates (7), as viewed in the vehicle's longitudinal axis, are positively overlapped at the top front and rear.

4. Vehicle roof design according to one of the foregoing Claims, characterised in that the mounting plates (7) are made of galvanised sheet metal pressings.

5. Vehicle roof design according to Claim 4, characterised in that, in the closed-die press forming process for the mounting plate (7), a core hole with a downward projecting bead rim (11) is pressed into the mounting plate (7) to form a passage-type threaded bore (8), and that a passage thread is then cut into said core hole that has thus been extended.

## Revendications

1. Structure de toit de véhicule notamment de cabine de camion pour la fixation des pièces rapportées des superstructures, avec des cavités dans la tôle ou la peau extérieure du toit et les surfaces d'appui sur lesquelles ou auxquelles sont fixés indirectement les organes de support des structures ou superstructures de toit, caractérisée en ce que :
- les cavités (3) sont enfoncées dans la peau ou la tôle extérieure (2) du toit,
- chaque cavité (3) se compose d'une goulotte d'évacuation d'eau (4) et de part et d'autre de celle-ci, de surfaces d'appui (5, 6) situées plus haut,
- une plaque de fixation (7) qui enjambe la goulotte d'évacuation d'eau (4) au niveau des deux surfaces d'appui (5, 6) d'une cavité (3), est soudée en appui,
- chaque plaque de fixation (7) comporte un taraudage traversant (8) et une face supérieure (12), plane, qui en position de montage ne dépasse pas ou ne dépasse que légèrement du contour du toit, et
- sur les faces supérieures (12) des plaques de fixation (7) s'appuient les organes de support (13, 14) des structures et superstructures de toit (16, 17) et y sont fixés à l'aide de vis de fixation (15) vissées dans les taraudages traversants (8), et qui pénètrent sans toucher la peau extérieure du toit jusque dans la zone de la goulotte d'évacuation d'eau (4), respective.

2. Structure de toit de véhicule selon la revendication 1, caractérisée en ce que les plaques de fixation (7) comportent, dans la direction longitudinale du véhicule, des zones (9, 10) recourbées à l'avant et à l'arrière vers le bas, pénétrant dans la zone des goulottes d'évacuation d'eau (4) et servant à rigidifier.

3. Structure de toit de véhicule selon l'une des revendications précédentes, caractérisée en ce que les organes de support (13, 14) sont conçus pour que les plaques de fixation (7) soient débordées dans la direction longitudinale du véhicule à l'avant et à l'arrière par une liaison par la forme.

4. Structure de toit de véhicule selon l'une des revendications précédentes, caractérisée en ce que les plaques de fixation (7) sont des pièces en tôle pressées, zinguées.

5. Structure de toit de véhicule selon la revendication 4, caractérisée en ce que pour former un taraudage traversant (8) dans la plaque de fixation (7), au moment du pressage dans la matrice, on presse un trou dont le bord en bourrelet (11) est en saillie vers le bas et on taraude un filetage traversant dans le trou ainsi prolongé.
